# FASCICULE DE BREVET EUROPEEN

(11) **EP 0 863 111 B1**
(45) Date de publication et mention de la délivrance du brevet: **11.07.2001**
(21) Numéro de dépôt: 98400526.4
(22) Date de dépôt: 05.03.1998
(51) Int. Cl.: C02F 1/58, C02F 1/70, C02F 9/00

(54) **Procédé de décoloration d'effluents aqueux comprenant des amines aromatiques**
Verfahren zur Entfärbung von aromatischen Aminen enthaltenden Abwasser
Process for the decoloration of an effluent containing aromatic amines

(30) Priorité: 07.03.1997 FR 9702723
(43) Date de publication de la demande: 09.09.1998
(73) Titulaire: RHODIA CHIMIE, 92512 Boulogne Billancourt Cedex (FR)
(72) Inventeur: Coudret, Jean-Luc, 18800 Baugy (FR); Marion, Philippe, 69100 Villeurbanne (FR)
(74) Mandataire: Wattremez, Catherine

(56) Documents cités:
- EP-A- 0 084 285
- GB-A- 2 083 453
- US-A- 4 324 667

## Description

La présente invention a pour objet un procédé de décoloration d'effluents aqueux comprenant plus particulièrement des amines aromatiques.

Les amines ou polyamines aromatiques sont classiquement synthétisées à partir des dérivés aromatiques mononitrés ou polynitrés correspondants, en mettant en jeu une réaction d'hydrogénation. Un tel type de procédé est habituellement mis en oeuvre pour préparer, entre autres composés, l'aniline à partir du mononitrobenzène, les différents isomères de la toluidine à partir des isomères du mononitrotoluène, ou encore les divers isomères de la toluène diamine, à partir des isomères du dinitrotoluène.

La réaction d'hydrogénation s'accompagne par la production de quantités importantes d'eau, qu'il est nécessaire de séparer des amines synthétisées, avant de mettre ces dernières en oeuvre dans des réactions ultérieures de transformation. On se trouve par exemple devant un tel cas de figure pour la synthèse de toluène diisocyanates à partir de la toluène diamine.

La séparation de l'eau et des amines préparées a lieu selon des méthodes connues comme principalement la distillation.

Les eaux récupérées sont colorées, ou bien encore se colorent, car elles contiennent des quantités plus ou moins élevées d'amines. En effet, les amines aromatiques, sous l'action principale de la lumière et/ou de l'oxygène de l'air, s'oxydent pour donner des composés polyaromatiques conjugués, comprenant entre autres des fonctions azo. Dans certains cas, on peut même avoir l'apparition d'un précipité dans les eaux.

Il est clair que de tels effluents ne peuvent pas être rejetés directement et doivent par conséquent faire l'objet d'un prétraitement visant à éliminer les amines et cette coloration qu'elles induisent.

Diverses solutions ont été proposées principalement dans le but de décolorer ces eaux. Ainsi, on peut citer les procédés dans lesquels on oxyde les amines présentes dans les effluents aqueux. Par exemple, on connaît les traitements à base d'eau de Javel, d'eau oxygénée, d'ozone, ceux mettant en jeu un mélange sulfonitrique ou encore du persulfate. On connaît aussi des procédés mettant en oeuvre des techniques physico-chimiques, comme par exemple l'adsorption sur des résines, des techniques biologiques telles que l'emploi d'enzymes, seules ou associées à des composés chimiques, comme l'eau oxygénée, ou bien encore mettant en jeu des traitements chimiques comme le blocage des amines avec des fonctions aldéhydes. Il est enfin possible d'utiliser des méthodes de purification par voie électrochimique. Ces techniques, si leur intérêt n'est pas remis en cause ici, présentent toutefois divers inconvénients. En effet, certaines des techniques proposées sont difficiles à mettre en oeuvre à l'échelle industrielle, et nécessitent, parfois, d'engager et de maintenir des investissements relativement importants. C'est par exemple le cas lorsqu'il s'agit d'utiliser comme agent de traitement des enzymes. Les moyens connus peuvent aussi mettre en oeuvre des composés plutôt défavorables à l'environnement, en tant que tels ou par les produits dont ils sont à l'origine ; composés ou produits qu'il faut éliminer par la suite, nécessitant de ce fait, une étape supplémentaire.

Enfin, ces produits ne sont pas toujours souhaités pour des questions d'hygiène industrielle et de sécurité.

La présente invention a donc pour premier objectif de proposer une méthode de décoloration d'effluents aqueux comprenant des amines aromatiques, simple de mise en oeuvre, et peu onéreuse.

Un autre objectif de l'invention est de mettre à disposition un procédé très efficace qui permettrait à la fois de décolorer les eaux comprenant les amines aromatiques, mais aussi de bloquer le mécanisme de coloration de ces eaux.

Ces buts et d'autres sont atteints par la présente invention qui a pour objet un procédé de décoloration d'un effluent aqueux comprenant des amines aromatiques et/ou leurs dérivés, dans lequel on met en contact ledit effluent aqueux avec un agent choisi parmi le sulfite de métal alcalin ou alcalino-terreux, l'hydrogénosulfite de métal alcalin ou alcalino-terreux, ou leurs mélanges.

Ainsi que l'on peut le constater, le procédé selon l'invention est très simple de mise en oeuvre. En effet, la mise en contact de l'agent avec les effluents à traiter est efficace et ne n'oblige pas de se trouver dans des conditions de mise en oeuvre contraignantes, notamment en ce qui concerne la sécurité.

De plus, le procédé selon l'invention ne nécessite pas l'engagement d'investissements très importants car il suffit de disposer d'une cuve dans laquelle la mise en contact de l'agent précité avec les eaux puisse avoir lieu.

En outre, il est fait remarquer que ni le sulfite ni l'hydrogénosulfite ne sont à l'origine, des produits néfastes pour l'environnement. D'une part, les quantités employées ne sont pas très élevées, d'autre part, les produits résultants sont essentiellement des sulfates, qui ne sont pas considérés comme des polluants prioritaires.

Par ailleurs, et cela constitue un avantage supplémentaire, les eaux traitées selon le procédé de la présente invention ne voient pas leur DCO (Demande Chimique en Oxygène) augmentée de manière substantielle. De ce fait, il n'est pas nécessaire, a priori, d'associer le procédé selon l'invention à une étape supplémentaire dans laquelle on diminuerait la DCO des effluents.

Mais d'autres caractéristiques et avantages de la présente invention apparaitront plus clairement à la lecture de la description et des exemples qui vont suivre.

Ainsi que cela a été indiqué auparavant, la présente invention est destinée à traiter des effluents aqueux comprenant des amines aromatiques et/ou leurs dérivés.

Par amines aromatiques, on entend des mono- ou poly-amines aromatiques, comprenant au moins un motif aromatique en C₆-C₁₄. De préférence, le noyau aromatique est en C₆-C₁₀. Ledit noyau aromatique peut ou non être substitué par un ou plusieurs radicaux hydrocarbonés, saturés ou non, linéaires, cycliques ou ramifiés en C₁-C₁₀.

Plus précisément, les radicaux hydrocarbonés précités, substituant éventuellement lesdits motifs aromatiques, peuvent être choisis parmi les radicaux alkyles, aryles, alkyle-aryles et aryle-alkyles en C₁-C₁₀, de préférence en C₁-C₆.

Selon un mode de réalisation préféré de l'invention, lesdites amines sont des amines primaires.

A titre d'amine mono- ou polyfonctionnelles convenables, on peut citer celles comprenant un noyau benzénique ou naphtalénique substitués ou non par un ou plusieurs radicaux méthyle, éthyle, propyle, butyle, pentyle, hexyle et/ou leurs isomères.

De préférence, le procédé selon l'invention peut être mis en oeuvre pour traiter des effluents aqueux comprenant au moins l'une des amines suivantes : l'aniline, l'un ou plusieurs des isomères de la toluidine, l'un ou plusieurs des isomères de la toluène diamine, l'un ou plusieurs des isomères de la xylylène diamine, l'un ou plusieurs des isomères de la phénylène diamine.

Il est à noter que les eaux traitées selon le procédé de l'invention sont, de manière avantageuse, celles récupérées lors de la synthèse des amines précédemment citées.

Mais bien entendu, la présente invention n'est pas limitée à ce type d'effluents. Ainsi, elle peut de même être appliquée pour le traitement d'effluents aqueux comprenant de telles amines, indépendamment de leur préparation.

Par dérivés des amines aromatiques, on désigne les produits d'oxydation des amines aromatiques définies auparavant. Ainsi, les effluents traités peuvent comprendre, éventuellement en mélange avec les amines précitées, des oligomères obtenus par oxydation de ces dernières. Dans ce cas, les dérivés peuvent comprendre des fonctions amines primaires, secondaires, tertiaires, seules ou en mélange. De plus, lesdits dérivés peuvent comprendre d'autres fonctions du type azo, imine, azoxy, sans toutefois être limitées à ces exemples.

La quantité d'amines présentes dans les effluents aqueux à traiter dépend de l'origine des effluents, en d'autres termes des conditions dans lesquelles ils ont été obtenus. Ainsi, la teneur en amine peut être fonction notamment des conditions de marche du procédé, de la durée du stockage de ces effluents.

Le procédé selon l'invention peut aussi être particulièrement approprié pour le traitement des pics de rejet, c'est-à-dire pour le traitement d'effluents comprenant, de manière inhabituelle, des quantités élevées d'amines. C'est notamment le cas lorsque l'on doit traiter les eaux provenant du nettoyage des ateliers dans lesquels sont synthétisés les amines.

En fait, le procédé selon l'invention est très avantageux par son côté polyvalent, en ce sens qu'il peut constituer à la fois un procédé principal de traitement d'effluents aminés, mais aussi un traitement d'appoint en cas d'augmentation importante de la teneur en amines aromatiques dans lesdits effluents.

A titre indicatif, la quantité d'amines aromatiques présente dans les effluents à traiter selon l'invention est, dans des conditions normales, au plus de l'ordre de 1000 ppm. Bien entendu, on ne sortirait pas du cadre de la présente invention en traitant des effluents comprenant une teneur plus élevée en amines aromatiques.

Le traitement selon l'invention consiste donc à mettre en contact au moins un agent choisi parmi au moins un sulfite de métal alcalin ou alcalino-terreux, au moins un hydrogénosulfite de métal alcalin ou alcalino-terreux, ces composés pouvant être utilisés seuls ou en mélange.

Conviennent notamment à la réalisation de l'invention le sulfite de sodium, le sulfite de potassium, le sulfite de magnésium, le sulfite de calcium, l'hydrogénosulfite de sodium, l'hydrogénosulfite de potassium, l'hydrogénosulfite de magnésium, l'hydrogénosulfite de calcium, ces composés pouvant être indifféremment mis en oeuvre seuls ou sous la forme d'un mélange de plusieurs d'entre eux.

Selon un mode de réalisation particulier de l'invention, on met en oeuvre un sulfite ou un hydrogénosulfite de métal alcalin. De préférence, on utilise le sulfite de sodium.

La quantité d'agent entrant en jeu dans le traitement de l'invention dépend de la teneur en amines aromatiques ou en leurs dérivés, présents dans les effluents.

Ainsi, on met en oeuvre l'agent dans une quantité au moins stoechiométrique par rapport au nombre de moles de fonctions amine présentes dans l'effluent à traiter. De préférence, on met en oeuvre une quantité d'agent correspondant à un excès par rapport au nombre de moles de fonctions amine présentes dans l'effluent à traiter.

Selon un mode de réalisation particulièrement approprié de l'invention, on utilise une quantité d'agent correspondant à 1 à 10 équivalents par rapport à un équivalent de fonction amine, et de préférence, une quantité d'agent supérieure à 1 équivalent par rapport aux fonctions amine. Il est possible, bien que cela n'apporte pas d'avantages particuliers, de traiter les effluents avec des quantités en agent, supérieures à celles indiquées.

De préférence, la quantité d'agent mise en jeu dans le traitement selon l'invention correspond à un excès de 4 à 7 équivalents par rapport à un équivalent de fonction amine.

Il est à noter que généralement, la quantité d'agent mise en jeu ne dépasse pas 1 % en poids par rapport au poids de l'effluent à traiter.

L'agent peut être employé tel quel ou sous forme d'une solution aqueuse.

La mise en contact peut avoir lieu, de manière avantageuse, à température ambiante, ou bien à une température plus élevée de manière à accélérer le processus de décoloration. Si la mise en contact est effectuée à chaud, la température reste en général voisine de 80°C. Il est précisé que d'une manière avantageuse, on effectue le traitement des effluents à la température à laquelle ils sont récupérés du procédé.

On peut utiliser une cuve pour la mise en contact comprenant de préférence des moyens d'agitation.

La durée de la mise en contact est fonction de l'opération que l'on veut réaliser. Ainsi, s'il s'agit de bloquer le processus de coloration, un temps très court est suffisant, car la réaction est instantanée. Par contre, si l'on souhaite décolorer le milieu, une durée plus importante de mise en contact est souhaitable. L'homme de l'art est tout à fait capable, en ne mettant en oeuvre que ses connaissances générales, d'adapter le temps de contact selon les objectifs à atteindre.

A titre indicatif, la durée de la mise en contact est de l'ordre de la minute à plusieurs heures.

Les effluents ainsi traités peuvent si nécessaire, faire l'objet d'un traitement de purification supplémentaires, s'ils contenaient à l'origine d'autres impuretés, avant ou après le traitement selon l'invention.

Des exemples concrets mais non limitatifs de l'invention vont maintenant être présentés.

### EXEMPLES

Les exemples ont pour objectif de démontrer l'intérêt de l'invention pour le blocage de la coloration des effluents.

L'appréciation visuelle de la coloration est exprimée avec un nombre donné en unités HAZEN. Le nombre d'HAZEN est une fonction de la valeur Y1, corrélée avec les paramètres L, a*, b* du système de mesure de couleur dans l'espace HUNTER (NF T20-605, Juin 1965).

La valeur de Y1 a été mesurée avec un colorimètre MINOLTA CT310 (norme ASTM D-1925).

Dans l'espace HUNTER (L, a*, b*) deux axes définissent le plan chromatique : l'un rouge / vert représente les variations de a* (rouge si a* >0), l'autre jaune / bleu représente les variations de b* (jaune si b*>0) ; l'axe L correspond à la clarté (L=0 pour le noir, L = 100 pour le blanc).

### 1/ COMPOSITION DU MELANGE AQUEUX

On prépare des échantillons de 100 ml d'eau comprenant :

| | |
|---|---|
| isomères ortho / méta / para de la toluidine | 500 ppm |
| isomères 2,3/3,4/2,6/2,4 de la toluènediamine | 200 ppm. |

### 2/ RESULTATS

Le tableau suivant rassemble les mesures de coloration de l'effluent aqueux tel que défini auparavant, après une durée de stockage de 8 et de 11 jours, à la lumière et à l'air, à température ambiante.
Lorsqu'il est présent, l'agent est utilisé avec une quantité correspondant à 1 % en poids par rapport au poids total de l'effluent.

NB : la coloration initiale du mélange correspond à une valeur de 8 pour Y1.

| **AGENT** | **Y1 (nb HAZEN) (8 jours)** | **Y1 (nb HAZEN) (11 jours)** |
|---|---|---|
| **Référence** | 16 (320 HAZEN) | 38 (HG) |
| **Nitrite de sodium** | 16 (320 HAZEN) | 38 (HG) |
| **Peroxyde d'hydrogène (à 30%)** | 19 (400 HAZEN) | 17 (350 HAZEN) |
| **Acide sulfurique (98 %)** | 14 (270 HAZEN) | 29 (HG) |
| **Sulfite de sodium** | 8 (145 HAZEN) | 7 (125 HAZEN) |
| HG : Hors Gamme HAZEN | | |

Comme on peut le constater, le procédé selon l'invention permet de bloquer efficacement tout processus de coloration des effluents auqueux.

On observe pour l'eau oxygénée deux phases, l'une dans laquelle la coloration devient plus intense et une seconde où elle diminue. Toutefois, après 20 jours de stockage après traitement, les eaux issues du procédé selon l'invention présentent toujours une valeur stable de Y1, valeur qui reste plus faible que celle obtenue avec l'eau oxygénée.

## Revendications

1. Procédé de décoloration d'un effluent aqueux comprenant des amines aromatiques, et/ou leurs dérivés, caractérisé en ce que l'on met en contact ledit effluent aqueux avec un agent choisi parmi au moins un sulfite de métal alcalin ou alcalino-terreux, au moins un hydrogénosulfite de métal alcalin ou alcalino-terreux, ou leurs mélanges.

2. Procédé selon la revendication précédente, caractérisé en ce que l'on utilise l'agent en une quantité au moins stoechiométrique par rapport au nombre de moles de fonctions amine présentes dans l'effluent à traiter.

3. Procédé selon la revendication précédente, caractérisé en ce que l'on utilise une quantité d'agent en excès par rapport au nombre de moles de fonctions amine présentes dans l'effluent à traiter.

4. Procédé selon l'une quelconque des revendications 2 ou 3, caractérisé en ce que l'on utilise une quantité d'agent correspondant à 1 à 10 équivalents par rapport à un équivalent de fonction amine.

5. Procédé selon l'une quelconque des revendications précédentes, caractérisé en ce que l'on utilise l'agent tel quel ou en solution.

6. Procédé selon l'une quelconque des revendications précédentes, caractérisé en ce que la quantité d'amines aromatiques présentes dans l'effluent est au plus de l'ordre de 1000 ppm.

## Patentansprüche

1. Verfahren zur Entfärbung von Abwasser, das aromatische Amine und/oder Derivate davon enthält, dadurch **gekennzeichnet,** dass man das Abwasser mit einem Mittel ausgewählt aus mindestens einem Alkali- oder Erdalkalimetallsulfit, mindestens einem Alkali- oder Erdalkalimetallhydrogensulfit oder ihren Gemischen in Kontakt bringt.

2. Verfahren nach dem vorstehenden Anspruch, dadurch **gekennzeichnet,** dass man das Mittel in einer mindestens stöchiometrischen Menge bezogen auf die Anzahl der Mole der in dem zu behandelnden Abwasser vorhandenen Aminfunktionen verwendet.

3. Verfahren nach dem vorstehenden Anspruch, dadurch **gekennzeichnet,** dass man eine Menge des Mittels im Überschuss bezogen auf die Anzahl der Mole der in dem zu behandelnden Abwasser vorhandenen Aminfunktionen verwendet.

4. Verfahren nach einem der Ansprüche 2 oder 3, dadurch **gekennzeichnet,** dass man eine Menge des Mittels entsprechend 1 bis 10 Äquivalenten bezogen auf ein Äquivalent der Aminfunktion verwendet.

5. Verfahren nach einem der vorstehenden Ansprüche, dadurch **gekennzeichnet,** dass man das Mittel als solches oder in Lösung verwendet.

6. Verfahren nach einem der vorstehenden Ansprüche, dadurch **gekennzeichnet,** dass die Menge der aromatischen Amine, die in dem Abwasser vorhanden ist, höchstens im Bereich von 1000 ppm liegt.

## Claims

1. Process for the decoloration of an aqueous effluent comprising aromatic amines and/or their derivatives, characterized in that the said aqueous effluent is brought into contact with an agent chosen from at least one alkali metal or alkaline earth metal sulphite, at least one alkali metal or alkaline earth metal hydrogensulphite, or their mixtures.

2. Process according to the preceding claim, characterized in that the agent is used in an amount at least stoichiometric with respect to the number of moles of amine functional groups present in the effluent to be treated.

3. Process according to the preceding claim, characterized in that use is made of an amount of agent in excess with respect to the number of moles of amine functional groups present in the effluent to be treated.

4. Process according to either one of claims 2 and 3, characterized in that use is made of an amount of agent corresponding to 1 to 10 equivalents with respect to one equivalent of amine functional group.

5. Process according to any one of the preceding claims, characterized in that the agent is used as is or in solution.

6. Process according to any one of the preceding claims, charcterized in that the amount of aromatic amines present in the effluent is at most of the order of 1000 ppm.
